# EUROPEAN PATENT APPLICATION

(11) **EP 1 881 346 A1**
(43) Date of publication of application: **23.01.2008**
(21) Application number: 06015127.1
(22) Date of filing: 20.07.2006
(51) Int. Cl.: G01S 13/93, G01W 1/10

(54) **A method for the determination of future driving conditions**

(71) Applicant: Bayerische Motoren Werke Aktiengesellschaft, 80809 München (DE)
(72) Inventor: Strassberger, Markus, 80687 München (DE); Reiss, Maximilian, 94032 Passau (DE)

(57) **Abstract**

In a method for the determination of future driving conditions of a vehicle
- information concerning driving-related conditions is obtained from a plurality of spatially distributed locations,
- at least one virtual area of interest is defined along an estimated route of the vehicle,
- the probability of the occurrence of at least one discrete driving condition state within at least one such virtual area of interest is determined from said information using a probabilistic network and
- spatial relations between the spatially distributed locations and the corresponding virtual area of interest are translated into causal dependencies of the probabilistic network.

## Description

The invention relates to a method for the determination of future driving conditions of a vehicle.

Most modern vehicles are equipped with sophisticated on-board sensors to detect critical driving conditions. However, corresponding systems usually only cover the current position of the vehicle. In other words, they are only reactive as they are not suitable to foresee any critical situations, which the vehicle may potentially encounter in future.

During the last decade, car manufactures and suppliers put a lot of effort into developing predictive and proactive driver assistance systems such as ACC (adaptive cruise control), mainly based on near range sensing technologies such as radar, lidar, and ultra-sonic or optical image processing. Some of these systems are already available and perform very well. Unfortunately, these systems are typically quite expensive and available for upper-class vehicles only.

Predictive driver assistance systems are a key issue in the visionary field of accident-free driving. Vehicles should be enabled to foresee critical driving conditions and therefore inform their drivers in a timely manner. In this context, direct communication among vehicles will complement on-board sensor systems, enabling a new paradigm in driving assistance: collaborative situation-awareness.

Inter-vehicle communication based on vehicular ad hoc networks will play an increasingly important role for future active safety systems. The main idea is to interlink the on-board sensor systems of multiple vehicles. Thus, vehicles have access to (abstracted and standardized) sensor information from locations different from their own. This enables a significant enhancement of the drivers' horizon through safety-related information that is gathered and provided directly by other vehicles. Therefore, inter-vehicle messaging is widely considered as a promising complementary technology to support foresighted driving and accident avoidance. It is, therefore, one key issue of the vision of an accident-free traffic.

In this context, for example Kosch (T. Kosch, "Local danger warning based on vehicle ad-hoc networks: Prototype and simulation," in Proceedings of the 1st International Workshop on Intelligent Transportation (WIT 2004), Hamburg, Germany, 2004, pp. 43-47) outlined the concept of a local danger warning (LDW) service, where vehicles directly exchange information on the present road condition and dangerous situations. This can significantly reduce the likelihood that vehicles will get into a critical driving condition, because the drivers' attention will be systematically directed to the spot of the danger in the run-up of the situation. Obviously, this in turn can lead to a significant reduction of accidents.

However, this vision of a future system introduces new requirements, especially concerning reliable situation analysis and inference. In order to provide a reliable prediction of the situation ahead, not only must the in-vehicle sensor data be evaluated, but also information that is collected by other vehicles at distant locations. Thus, one of the most challenging questions concerning those cooperative and predictive assistance systems is how to derive a reliable picture of a situation, taking into account a variety of different information sources from local on-board sensors, infrastructure-based telematics services, statistical domain knowledge, and surrounding vehicles.

In general, situation analysis for a vehicle comprises two separate steps: individual analysis based only on own sensor measurements and analysis based on external information sources, typically observed at remote locations and at varying points in time. Corresponding technical devices and methods must, therefore, deal with fragmented and incomplete inputs from various sources, in particular from other vehicles. In addition, typically the provided information is unconfident, because only few critical situations can be detected directly by dedicated sensor systems. Furthermore, spatial and temporal effects have to be taken into account. Existing devices and methods have failed to provide a solution to this problem. In particular, the following questions are still unsolved: Which information is available that can contribute to derive a comprehensive view on the current situation of a vehicle? Which technique can be used to optimally combine this information and how can a specific solution be designed? How can this information be combined with previously measured information (spatial and temporal aspect)?

It is an object of the present invention to provide a simple method for the determination of future driving conditions that allows for a systematic consideration of information from different information sources.

The object of the invention is achieved by a method as claimed in the independent claim 1. Preferred embodiments of the present invention are set out in the dependent claims 2 to 9.

The invention is based on a novel approach for collaborative situation-awareness in vehicles based on the probabilistic network paradigm.

The approach enables a spatial analysis, preferably even a spatio-temporal analysis, of remote locations ahead by using additional intermediate nodes, thereby utilizing information concerning driving-related conditions obtained from a plurality of spatially distributed locations. Preferably, said information concerning driving-related conditions is based on previous observations by other vehicles. Furthermore, preferably on-board sensor data is utilized.

Preferably said information concerning driving-related conditions is available as higher-level information, e.g. "traffic jam" or "heavy fog". Alternatively, information concerning driving-related conditions can also be available as raw sensor data or in any embodiment between these extremes.

In particular, the invention is based on a network architecture that allows one to take into account the spatial influence and, preferably, even the temporal influence of distributed measurements. Preferred embodiments of the invention comprise features as situation adaptive instantiation of selected networks parts, personalization in terms of individual causal dependencies and event notification and adaptive space resolution to optimize the computational performance.

The invention is based on the probabilistic network paradigm. Probabilistic networks are a commonly used approach for sensor fusion purposes, especially in the domain of context-aware services, where sensor inputs are typically fuzzy and incomplete.

They are therefore basically suitable to be used for a collaborative situation analysis as described above. A probabilistic network (often also referred to as Bayesian Network, belief network, or causal probabilistic network) is a graphical model with probabilities for reasoning under uncertainty. It consists of a directed, acyclic graph (DAG) with the nodes representing random variables and a set of conditional probability distributions P(X | pa(X)). X denotes a discrete random variable with n discrete states and pa(X) the set of parents of X in the graph (the random variables on which X is conditionally dependent). Each node of the graph is linked with a so-called conditional probability table (CPT), comprising the corresponding specific statistical dependencies. Time sliced probabilistic networks (also known as Dynamic Bayesian networks (DBN) are an enhancement of probabilistic networks that model systems with dynamic behavior. Multiple instances (one for each time slice) of the static network are thereby interconnected. Object-Oriented Bayesian Networks (OOBN) are a further extension of the Bayesian Network approach, following the object-oriented ideas of software development, which models reusability by defining (in addition to the "normal" nodes) nodes which are instances of objects that can contain whole probabilistic networks. This simplifies the construction and modification of probabilistic networks and leads to a reduction of the overall complexity. These object instances can also be used to model dynamic behavior (similar as in DBNs).

In the vehicular domain, collaborative situation analysis in general and the use of probabilistic networks in particular have not been addressed in detail so far. DE 103 08 168 A1 mentions the general suitability of a Bayesian network for sensor fusion in vehicles, but does not deal with aspects as spatially and temporally distributed sensor information. However, spatially and temporally distributed sensor information is a key issue in order to achieve the object of the invention. Apart from the driver, the most obvious information sources regarding the vehicle itself are the numerous sensors built into the vehicle, e.g. windscreen wiper sensors or temperature sensors. Additionally, the vehicle can be connected to external services such as traffic information broadcasting systems or other vehicles. This rises the question: In which way can a probabilistic network be used, if information is provided, e.g. by other vehicles, at various positions (spatial aspect) and at various points in time (temporal aspect)?

The present invention provides an approach for spatial, preferably even spatio-temporal, information fusion in vehicles.

Further information, details, and preferred embodiments of the present invention are disclosed by the figures and the following explanations. Particularly, the method according to the present invention is demonstrated in an example scenario with aquaplaning. The figures show:
- Fig. 1: Initial time slice of a probabilistic network with monitor windows detecting heavy rain.
- Fig. 2: A complex probabilistic network for aquaplaning.
- Fig. 3: Situation-adaptive dynamic instantiation of individual network parts.
- Fig. 4: A network structure enabling the consideration of spatial effects.
- Fig. 5: A network structure considering an influence of a local belief on a remote location.
- Fig. 6: A seqence of snapshots from a simulation based on a method according to the present invention.
- Fig. 7: A typical trace of a belief in the states of a certain node (local).
- Fig. 8: A typical trace of a belief in the states of a certain node (remote).
- Fig. 9: An example for the insertion of virtual areas of interest along an estimated driving route.
- Fig. 10: Causal dependencies in a corresponding Bayesian network.

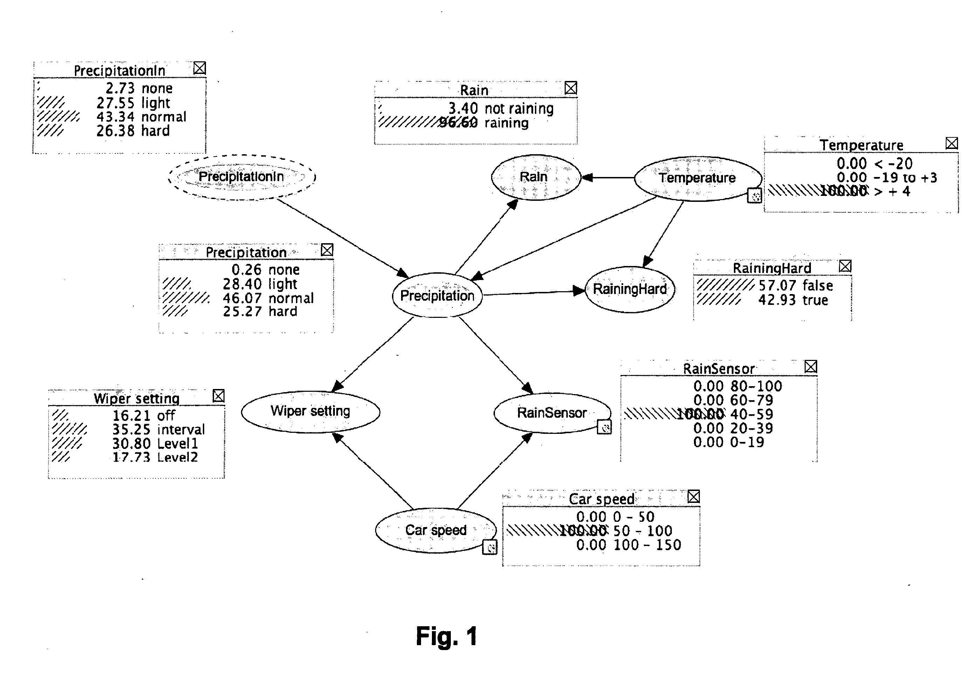

Fig. 1 shows an initial time slice of a probabilistic network with monitor windows detecting heavy rain.

Vehicles that encounter aquaplaning communicate their observations to other vehicles in the affected area. Thereby, it is assumed that aquaplaning cannot be directly measured by a dedicated sensor system but must be inferred from commonly available sensor inputs instead. One component of this aquaplaning network is the detection of heavy rain, since aquaplaning is more likely to occur at the same time as heavy rainfall. Other components are in-vehicle stability systems such as DSC (Dynamic Stability Control) or ESP (Electronic Stability Program) that are designed to improve a vehicle's handling in borderline situations, the speed, and (with weaker influence) other bad weather detection components such as fog detection.

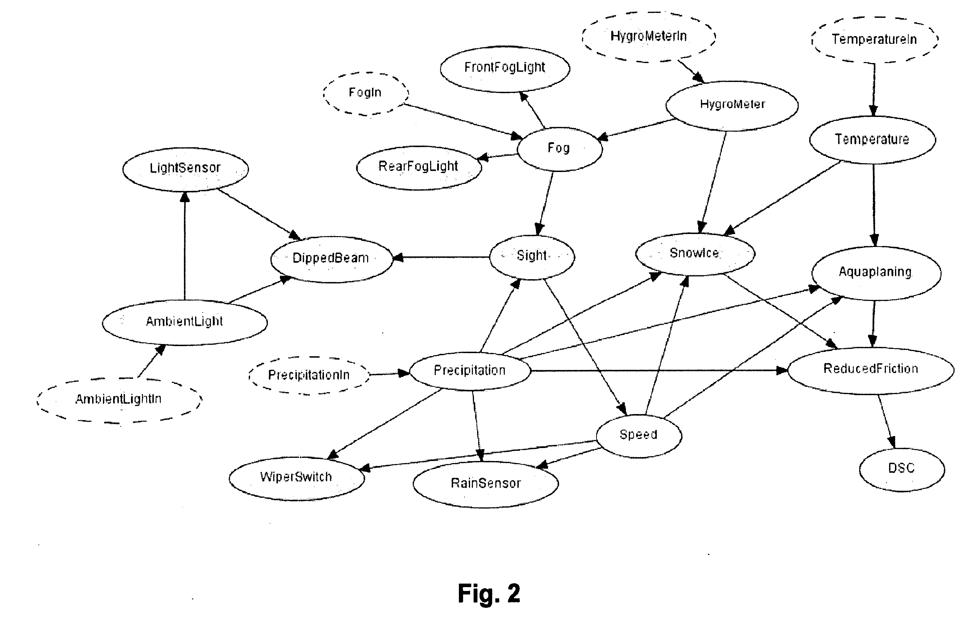

In order to increase readability, in the following we focus on the components influencing the likelihood of heavy rain to present our methodology and the resulting network architecture. However, the more complex aquaplaning scenario according to Fig. 2 follows exactly the same principles.

According to the above considerations, the probabilistic network is set up in two steps: First, only own (onboard) sensor inputs of a vehicle are used for a situation analysis at the current vehicle position. Second, the situation at a distant location is evaluated based on observations reported from other vehicles.

The wiper control reflects the custom wiper setting made by the driver, the rain sensor is suitable to give an estimate of the amount of water hitting the windshield and the outside temperature sensor can be used to determine if it is rain or rather snow.

When setting up the graph structure of this probabilistic network an initial idea could be to use these three sensor nodes as parent nodes to a new "virtual" node, called RainingHard and depending on their values a belief in RainingHard would be inferred. However, this would violate the causal design idea of probabilistic networks, since setting the wiper to a certain speed has no causal influence on the amount of rain. Thus, a network structure following the causal design would contain Temperature as parent of RainingHard which is a parent to both, Wiper setting and RainSensor. This design would not be sufficient, since, for example, the rain sensor does not give an estimate how hard it is raining outside, but an estimate how much water hits the small sensor field in the windshield. This water amount is not only dependent on the rain, but as well on the vehicle speed. E.g. when driving faster, at the same rain level more water will hit the rain sensor field within the same time interval. Therefore another sensor node is added to the probabilistic network, the Car speed node, which corresponds to the speed sensor.

Additionally, the "virtual" node Precipitation is added, which symbols the belief in the outside precipitation level, without distinction yet if this precipitation is rain or snow. Precipitation and Car Speed nodes are not parents to Wiper setting and Rainsensor (following a causal design), with Precipitation and Temperature as parents to RainingHard. The node Rain is another "virtual" node with the belief, if it is raining at all (which is supplementary in this example).

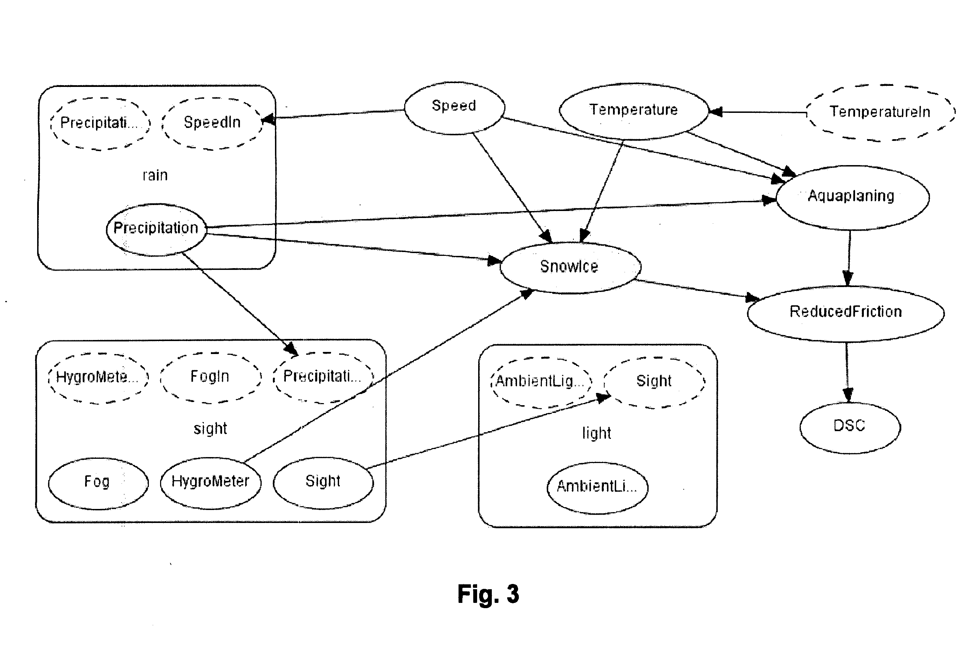

It is important to note that some causal dependencies are dependent on individual driver behaviour. For example, the wiper setting is not directly proportional to the amount of water, but typically also depends on the driver's preferences. Therefore, the necessary parts of the Bayesian network are dynamically instantiated according to the current situation. Thereby, individual causal dependencies can be taken into account. Those dependencies can be based on statistical knowledge and/or user questionnaires and can be continuously optimized during runtime using machine learning algorithms. Fig. 3 shows an example for the situation-adaptive dynamic instantiation of individual network parts.

A probabilistic network with nodes as described above represents the situation at one moment in time. In order to consider temporal factors, the concept of time sliced probabilistic networks is exploited. As already mentioned, in a time sliced version, the probabilistic network as described above corresponds to one time slice only.

This means that it represents deduced beliefs at a certain point in time. Corresponding nodes in the previous time slice Slice_{t-1} and the current time slice Slice_{t} are linked, if they are temporally dependent and if there is no new evidence (e.g. no new sensor readings are available). Note that corresponding nodes can be linked even in case new evidence was gained, but this link will not have any influence since probabilistic networks have the so-called Markov property.

An example is the node Precipitation in Fig. 1. A rain field has some spatial extent and moves/changes at limited speed. Therefore, when driving through it (or standing in it) the rain field does not appear and disappear suddenly. Therefore, the belief in the amount of precipitation in the previous time slice has statistical conditional influence on the belief in the amount of precipitation in the current time slice. This fact is indicated by the dotted parent node PrecipitationIn, which denotes the input from time slice Slice_{t-1}. At runtime, a certain number of time slices is kept, resulting in a time window that moves over time (sliding window technique).

In addition to the network structure, both the a priori probabilities for the nodes without parents and the conditional probabilities for nodes with parents must be determined. They can be set up manually or machine-learned from a sufficient set of probe data collected by test vehicles and/or continuously during real operation. Particularly based on the latter, by using feedback mechanisms a network can permanently be improved during runtime. This can be an important benefit in the automotive domain with typically very long life cycles. No explicite update may be needed then. Furthermore, such mechanisms can be used for an improvement of the adaptation of the system to the particular driver. In the vehicle domain a large amount of data can be systematically gathered from the vehicle sensors and other information sources. Therefore, existing and well evaluated automatic learning algorithms can be used for optimization based on this data.

A preferred embodiment of the invention is characterized in that
- when a probability of the occurrence of at least one discrete driving condition state exceeds a certain threshold a corresponding notification is output to the driver of the vehicle and
- said threshold is adjustable depending on the identity of the current driver.

Alternative embodiments of the invention allow for an adjustment depending on driver preferences. Additionally or alternatively the threshold can depend on the distance to the respective cause of risk as well as on the kind of risk. Multiple thresholds can be defined, each corresponding to a different form of notification (e.g. loud warning sound in case of a high belief and close proximity).

As an amendment or alternative to the use of thresholds and notifications, display properties (e.g. color and/or size) of a hazard symbol can be adapted depending on the probability of a certain hazard. Thus, the driver is enabled to recognize the probability of the hazard and can react according to his/her own interpretation.

As already mentioned, Fig. 1 shows one time slice of a heavy rain detection network. The rectangular monitor windows next to the nodes show the initial probability distribution for each node having no evidence in the probabilistic network yet. Similar steps were executed for the other parts of the aquaplaning detection network.

The probabilistic network as described above can be regarded as an object, which can be instantiated several times (e.g. for each time slice). These instances can be connected to other objects to build larger probabilistic networks, e.g., for aquaplaning.

The proposed system design has a set of those probabilistic network objects that can be connected dynamically depending on the current driving situation. For example, when driving in a rain field and detecting more intense rain fall over a period of time, an aquaplaning network could be instantiated, comprising a heavy rain detection object as described, one DSC / ESP object, and other probabilistic network objects supporting the detection of aquaplaning. Additional objects could represent other external information sources. Given detailed and reliable weather broadcasts, for example, or by means of rain fall radar measurement, this information could be used in a detection network, too, to further improve the reliability of the situation analysis.

By use of the present invention, when receiving remote data, either in form of services such as weather and traffic broadcast or from other vehicles, these probabilistic networks can also be used for an extended situation-awareness by inferring beliefs on the environment and road situation on the projected route, i.e. at a distant location ahead of the vehicle. Given a direct communication capability between vehicles as stated, these vehicles could broadcast information once a local probabilistic network yields information about a situation that contributes important information for others, and is therefore significant enough to be shared. Thereby, vehicles disseminate their belief concerning a specific situation they have recently observed (e.g., aquaplaning, heavy rain, or reduced visibility), together with evidence they have gained from own sensor inputs that might influence the further collaborative analysis (e.g., their current speed or the current temperature).

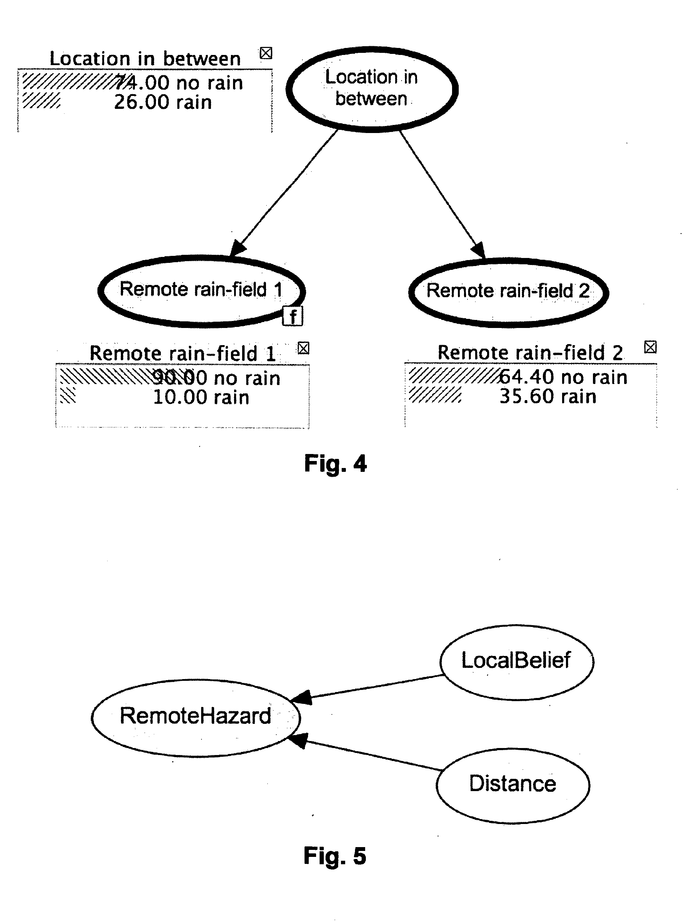

According to the present invention, in order to consider spatial effects, an additional intermediate node is inserted into the DAG, representing the belief in particular situations at dedicated intermediate locations or sub-areas along the estimated route. Fig. 4 shows such structure for the heavy rain example.

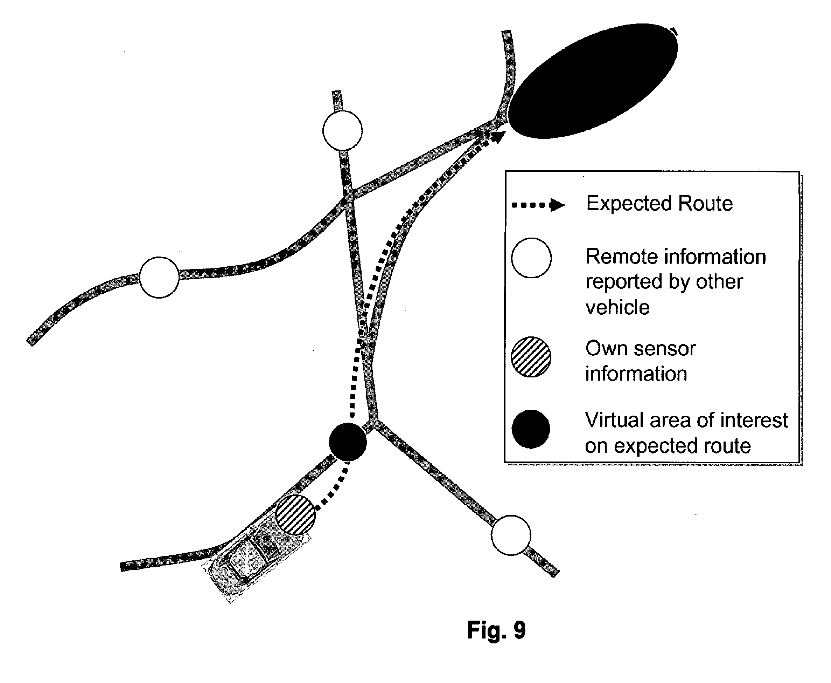

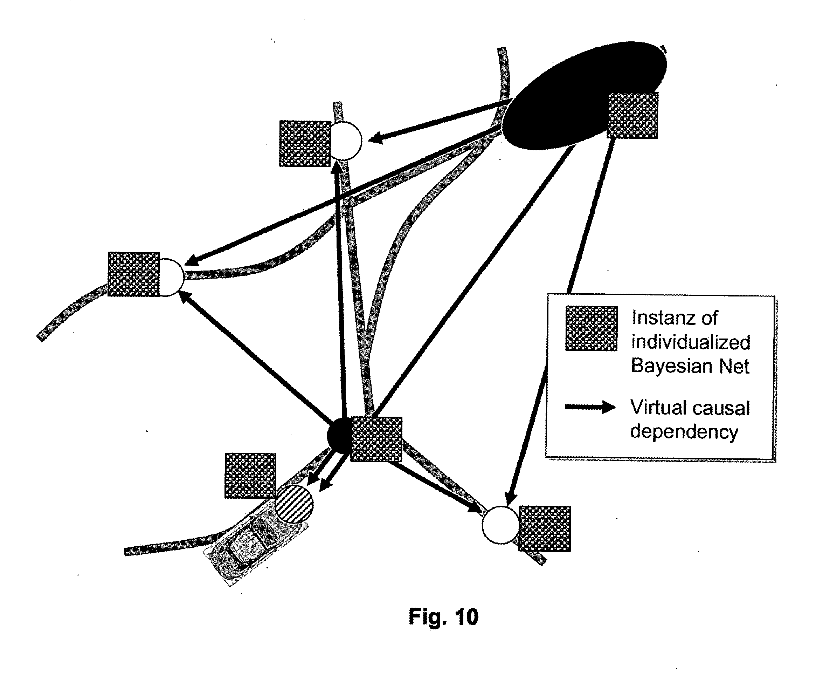

Fig. 9 shows an example map including a vehicle, its estimated driving route, and two virtual areas of interest which have been added along the estimated driving route according to the present invention. Furthermore, Fig. 9 shows three locations from where remote information is reported by other vehicles. The symbol "own sensor information" which is depicted close to the vehicle itself represents onboard sensor information gathered by the vehicle itself. Fig. 10 shows how the contents of Fig. 9 can be transformed into a corresponding Bayesian network.

According to the above principle, incoming information is locally stored and must be associated with local knowledge. A decrease of the resulting overhead can be achieved by a dynamic adaptation of the spatial resolution. Depending on the vehicle's current distance to a specific location, as well as on the task of the network under consideration, data is belonging to dedicated intermediate sub-areas along the route with various sizes, cf. Fig. 9 and Fig. 10. Thereby the size of these sub-areas varies depending on the movement of the vehicle. For example, for a rain warning 10 km away, the spatial resolution does not need to be one meter, it could well be 1 km. Once the vehicle approaches a particular position, the resolution of these sub-areas becomes more fine-grained. With such an adaptive approach, the computational complexity can be effectively reduced.

Aquaplaning is used as an example again: Assume a vehicle has received several messages from different vehicles in some time interval. At a specific location, each of those cars detected heavy rain, and, additionally, in some of them the DSC system came into operation. Temperature information can be used to further differentiate between different situations at the remote position. A high temperature could, for example, yield a high belief in an aquaplaning risk instead of an icy section. Additionally, information from a weather forecast service (e.g. projecting rainy weather for that region) can be used to support or weaken the belief about heavy rain by simply inserting another sensor-like information node. In addition, trust or reputation systems can be used to take into account individual trust in specific information sources. Information received from public authorities (e.g. police) or from certain telematics service providers can be assigned a higher trust level and therefore have a higher influence in the resulting belief than information from other (unknown) road participants. A corresponding discrimination can also be applied for different road users, e.g. vehicles of different manufactures.

When getting closer, the vehicle can also use its own local belief in such situation to influence the belief at the remote location. Details on when and how depend on the kind of situation. The resulting network structure is obviously similar to that considering spatial effects from remote information (see Fig. 5). Fig. 5 shows a network example considering an influence of a local belief on a remote location.

If a vehicle approaches a position it was warned of before, the driver can be alerted depending on the belief value. Therefore it is possible to personalize the HMI concept according to the drivers' preferences. For instance, careful drivers would set their warning threshold to comparatively low belief values. As an effect, more warning notifications are created ensuring that no potential danger is wrongly suppressed. On the other hand, some notifications will occur that do not describe the real situation. In other words, the quotient of false positive and false negative notifications can be adjusted according to individual user needs.

Additionally, when the vehicle drives past that position and the probabilistic network infers something different (detects a completely different situation than expected), the vehicle can send a revocation message to other vehicles, thus informing them about the changed situation.

The effectivity of the presented probabilistic network approach has been evaluated by simulation. The test scenario comprises several hundred vehicles in a sub-area of the Munich city center, some of them driving temporarily within a local rain field. Among these, 100 vehicles are equipped with ad hoc networking capabilities and seven of these vehicles are equipped with a probabilistic network component as described above. Node movements are determined by a traffic simulator.

Once a significantly high belief in heavy rain is reached by the local probabilistic detection network, a vehicle starts transmitting this information in a message, comprising also the current time stamp and position information. Other equipped vehicles around within a distance of up to 400 m receive and relay this message. At receiver side, the information is taken into account by a probabilistic network monitoring that remote position.

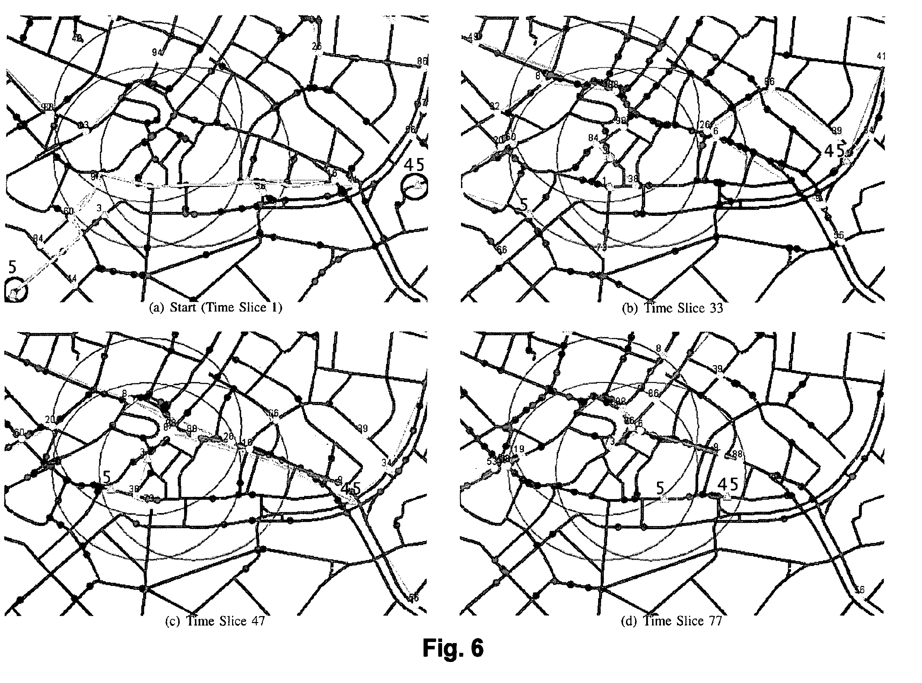

To reduce simulation complexity, rain fields are realized (and symbolized) by elliptic rain "layers". Where these layers superpose, the effect (in this case the rain intensity) adds up. The scenario is illustrated in Fig. 6. Three overlapping ellipses in Fig. 6(a) characterize different rain layers. The bold circles mark the starting position of vehicle 5 and 45, while the thick gray line indicates the planned route of vehicle 5.

In this test scenario, the rain layers are present right from the beginning. The first rain layer vanishes at time slice 80, the second one at time slice 90 and the last one at time slice 110. These end times for the layers are set in a way that, as soon as vehicle 45 reaches a layer, this layer will vanish shortly after, so that the belief in RainingHard will always be rather low in the local network of vehicle 45. This is used to evaluate the impact of revocation message as well as the approach to use the own local belief to evaluate the remote belief while approaching the position.

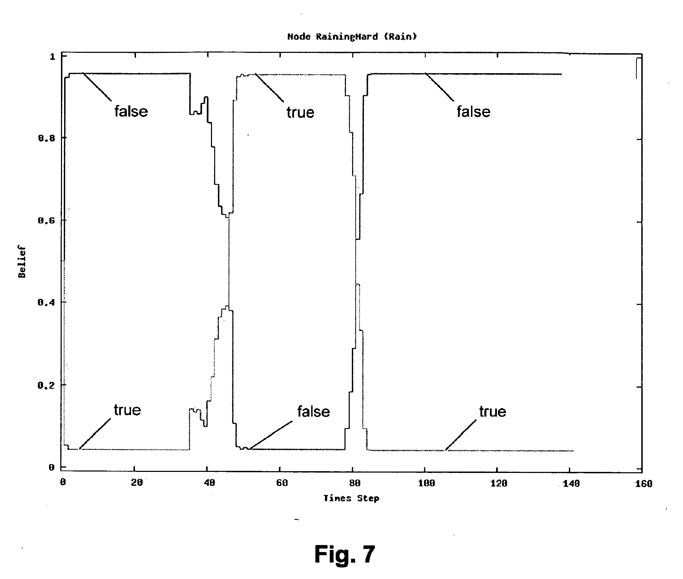

Fig. 7 delineates the development of the local belief in heavy rain of vehicle 5 during the test run. Vehicle 5 enters the rain field at time slice 33, which is shown in Fig. 6(b), reaches the second rain layer at time slice 39, and the heavy rain area (three layers) at time slice 44. Fig. 6(c), time slice 47, is the moment vehicle 5 starts sending, since at this moment a pre-defined belief threshold is reached. Note that in order to increase readability, the transmission activity is not shown in the picture. However, the information is received by the surrounding vehicles (38 and 73) and subsequently further disseminated in the affected area.

Fig. 6(d) shows the leaving of the rain area. The influence of the dynamic (time sliced) setup can be seen in the increase of the belief over time, when the sensor readings stay similar. For example, after time slice 80, when one of the layers disappears, it takes some time to reduce the high belief in heavy rain (see Fig. 7).

Meanwhile, vehicle 45 approaches the heavy rain area as well.

The probabilistic networks for the remote positions are based on the network for rain detection as described above, with manually set up CPTs. The version of the used network is event-driven, which means that a new slice is added whenever a new message is received. An additional node is instantiated taking into account the temporal effect. The node is used to weight the new data received, depending on the time lag between the time stamp of the message and its reception time.

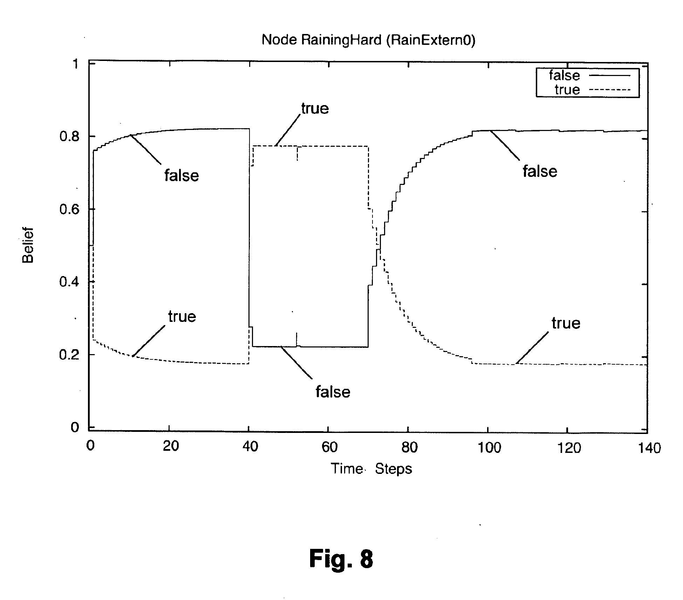

Fig. 8 shows the development of the belief in heavy rain at the remote position (viewpoint of vehicle 45). Actually, the probabilistic network for that remote position is instantiated once the vehicle 45 gets close enough to the position to consider it (in order to further reduce the resulting overhead, not every incoming message is directly used in a network. Instead the networks get instantiated on closure to the position). Up to time step 40 no messages were stored. Therefore, the part of the plot describing the time before 40 is showing the probability distribution for each time slice without evidence.

For the time in which messages have arrived, or arrive while the probabilistic network is running, the current belief is considered in the system.

The example shows that probabilistic networks as described above are a suitable means to collaboratively analyze and reliably predict the situation ahead of vehicles.

Collaborative situation-awareness of vehicles is widely considered as a key issue to achieve the visionary goal of accident-free traffic. Thereby, vehicles continuously exchange their local knowledge and can, therefore, appraise and predict the situation to come. However, such situation analysis is a complex problem, because the available information is incomplete and imprecise. In addition, spatio-temporal effects have to be taken into account.

The invention provides a novel approach for collaborative situation-awareness in vehicles based on probabilistic networks. Interdependencies of sensor measurements typically available in modern cars and their effects on potential critical situations are modelled. To regard spatial effects, the network architecture is extended by introducing additional nodes representing the belief in certain hypotheses at dedicated intermediate locations. Temporal aspects can be modelled using time sliced networks.

One of the main advantages of the approach is that the network is easily extendable with all kinds of different information sources that help to increase the reliability of the analysis. For example the approach is suitable to consider some or even all of the following contents: weather and traffic services, information on road works, exhanced digital map material including curve radiuses and/or the number of driving lanes and/or the (non-)existence of emergency lanes and/or road slope and road statistics concerning the risk of accidents and/or the incidence of fog and congestion, possibly depending on day time / day of the week / holidays / special events / season etc.

In addition, the concept is suitable to deal with imprecise and incomplete data. On top, the network behavior can be autonomously adapted even during runtime, thus taking into account the typically long life-cycles of vehicles.

The proposed approach is a valid solution to cooperatively and comprehensively analyse and predict the future driving conditions of vehicles. It is therefore a key technology enabler for a significant and sustainable reduction of road accidents. However, it is not only suitable for road or traffic warning applications, but for any kind of driver information system relying on (uncertain) context and environmental parameters.

## Claims

1. A method for the determination of future driving conditions of a vehicle,
**characterized in that**
- information concerning driving-related conditions is obtained from a plurality of spatially distributed locations,
- at least one virtual area of interest is defined along an estimated route of the vehicle,
- the probability of the occurrence of at least one discrete driving condition state within at least one such virtual area of interest is determined from said information using a probabilistic network and
- spatial relations between the spatially distributed locations and the corresponding virtual area of interest are translated into causal dependencies of the probabilistic network.

2. A method according to claim 1, **characterized in that** information concerning driving-related conditions is obtained from other vehicles.

3. A method according to claim 1 or 2, **characterized in that** information concerning driving-related conditions is obtained from onboard sensors.

4. A method according to any of claims 1 to 3, **characterized in that**
- said information is obtained at various points in time,
- at least part of said information is assigned time data concerning temporal aspects and
- said information is weighted depending on said time data regarding its processing by the probabilistic network.

5. A method according to any of claims 1 to 4, **characterized in that**
- at least part of said information is assigned trust data and
- said information is weighted depending on said trust data regarding its processing by the probabilistic network.

6. A method according to any of claims 1 to 5, **characterized in that** at least part of the probabilistic network is instantiated depending, on the current situation.

7. A method according to any of claims 1 to 6, **characterized in that** at least part of the probabilistic network is instantiated depending on the identity of the current driver.

8. A method according to any of claims 1 to 7, **characterized in that**
- when a probability of the occurrence of at least one discrete driving condition state exceeds a certain threshold a corresponding notification is output to the driver of the vehicle and
- said threshold is adjustable depending on the identity of the current driver.

9. A method according to any of claims 1 to 8, **characterized in that** the spatial resolution of said spatial relations translated into causal dependencies is adapted depending on the distance of the vehicle to the corresponding locations.

10. A method according to any of claims 1 to 9, **characterized in that**
- a plurality of virtual areas of interest is defined along said estimated route of the vehicle and
- the size and/or density of said virtual areas of interest along a certain part of the estimated route is adapted depending on the distance of the vehicle to the corresponding part of the route.
